# FASCICULE DE BREVET EUROPEEN

(11) **EP 4 225 590 B1**
(45) Date de publication et mention de la délivrance du brevet: **23.04.2025**
(21) Numéro de dépôt: 21801594.9
(22) Date de dépôt: 07.10.2021
(51) Int. Cl.: B60C 9/18, B60C 9/08, B60C 9/13, B60C 9/04

(54) **PNEUMATIQUE COMPRENANT UNE UNIQUE COUCHE DE CARCASSE**
REIFEN MIT EINER EINZELKARKASSENLAGE
TYRE COMPRISING A SINGLE CARCASS LAYER

(30) Priorité: 09.10.2020 FR 2010356
(43) Date de publication de la demande: 16.08.2023
(73) Titulaire: COMPAGNIE GENERALE DES ETABLISSEMENTS MICHELIN, 63040 Clermont-Ferrand (FR)
(72) Inventeur: DUCHEMIN, Sylvie, 63040 Clermont-Ferrand Cedex 9 (FR); GUIMARD, Bruno, 63040 Clermont-Ferrand Cedex 9 (FR); MOUREAU, Pierre, 63040 Clermont-Ferrand Cedex 9 (FR)
(74) Mandataire: M.F.P. Michelin
(86) Numéro de dépôt international: PCT/FR2021/051744
(87) Numéro de publication internationale: WO 2022/074342

(56) Documents cités:
- EP-A1- 0 812 708
- EP-A2- 1 201 462
- WO-A1-2018/051031
- US-A1- 2018 093 532
- CONTINENTAL AG: "Tyre Databook Car 4x4 Van 2019 - 2020", no. 55877447, 30 August 2019 (2019-08-30), XP055877447, Retrieved from the Internet <URL:https://blobs.continental-tires.com/www8/servlet/blob/376746/e7bc88056a2e824d499c056ec3266193/download-technical-databook-data.pdf> [retrieved on 20220111]
- NN: "Bereifungen und Luftdruck 2020 Pkw I SUV / 4x4", 31 July 2020 (2020-07-31), blobs.continental-tires.com, pages 1 - 248, XP055799335, Retrieved from the Internet <URL:https://blobs.continental-tires.com/www8/servlet/blob/3192738/9e085186620edca21a141afb28f253b1/umbereifung-2020-data.pdf> [retrieved on 20210428]

## Description

La présente invention concerne un pneumatique, un ensemble monté comprenant un tel pneumatique et un véhicule de tourisme comprenant un tel pneumatique ou un tel ensemble monté. Par pneumatique, on entend un bandage destiné à former une cavité en coopérant avec un élément de support de l'ensemble monté, cette cavité étant apte à être pressurisée à une pression supérieure à la pression atmosphérique. Un ensemble monté selon l'invention présente une structure de forme sensiblement toroïdale de révolution autour d'un axe principal de l'ensemble monté confondu avec l'axe principal du pneumatique.

L'avènement des véhicules de tourisme à motorisation électrique ou hybride entraine une augmentation du poids des véhicules, notamment en raison des batteries dont le poids est relativement important et sensiblement proportionnel à l'autonomie des véhicules. Ainsi, par exemple, pour augmenter l'autonomie d'un véhicule électrique, il est nécessaire d'augmenter la taille des batteries et par conséquent, le poids du véhicule.

De façon simple, on estime aujourd'hui qu'un kilomètre d'autonomie d'un moteur électrique conduit à augmenter le poids du véhicule d'un kilogramme. Ainsi, afin d'atteindre une autonomie de 500 kilomètres, il est nécessaire d'augmenter le poids d'un véhicule à motorisation thermique d'environ 500 kg. Afin d'équiper de tels véhicules, il est nécessaire d'utiliser des pneumatiques capables de porter une charge très élevée.

On connait de l'état de la technique un pneumatique pour véhicule de tourisme, ce pneumatique étant capable de porter une charge relativement élevée. Ce pneumatique est commercialisé sous la marque MICHELIN^{™} dans la gamme Pilot Sport 4 et présente une dimension 255/35R18. Ce pneumatique présente une version EXTRA-LOAD (en abrégé XL) au sens du manuel de la norme ETRTO 2019 et, dans cette version EXTRA-LOAD, présente un indice de charge égal à 94. Cela signifie que, à une pression de 290 kPa, le pneumatique est capable de porter une charge de 670 kg. Cette capacité de charge est relativement élevée par rapport à un pneumatique de même dimension et qualifié de STANDARD LOAD (en abrégé SL) présentant un indice de charge égal à 90 et qui est capable lui, de porter une charge de 600 kg à une pression de 250 kPa.

Afin de pouvoir être mis sur le marché, un tel pneumatique doit satisfaire des tests règlementaires. Par exemple en Europe, le pneumatique doit satisfaire à l'essai de performance charge/vitesse décrit en annexe VII du Règlement n°30 de la CEE-ONU.

Néanmoins, que ce soit dans sa version EXTRA-LOAD, et encore plus dans sa version STANDARD LOAD, un tel pneumatique n'est pas capable de porter le surplus de charge correspondant aux batteries nécessaires pour atteindre l'autonomie souhaitée. Ainsi, les manufacturiers pneumatiques ont dû proposer de nouvelles solutions afin de répondre à ce nouveau besoin.

Une solution envisagée par les manufacturiers pneumatiques est, pour un véhicule donné, l'utilisation de pneumatiques présentant une dimension plus importante ce qui permettrait de porter plus de charge. Ainsi, un véhicule donné pourrait être équipé de pneumatiques présentant un indice de charge plus élevé. Par exemple, un véhicule équipé des pneumatiques décrits ci-dessus dans leur version EXTRA LOAD pourrait être équipé de pneumatiques de dimension 275/35R19 dans leur version EXTRA-LOAD qui présentent un indice de charge égal à 100 et capable, à une pression de 290 kPa, de porter une charge de 800 kg, bien supérieure à la charge de 670 kg.

D'une part, une telle augmentation de la dimension des pneumatiques entraine nécessairement soit une réduction de l'espace intérieur du véhicule, soit un agrandissement du gabarit extérieur du véhicule, ce qui, dans les deux cas n'est pas souhaitable pour des raisons d'habitabilité et de compacité du véhicule.

D'autre part, une telle augmentation de la dimension des pneumatiques entraine une nouvelle conception du châssis du véhicule, ce qui pour des raisons évidentes de coûts, n'est pas non plus souhaitable.

Enfin, une telle augmentation de la dimension des pneumatiques, notamment de la largeur de section nominale, entraine une hausse du bruit extérieur généré par le pneumatique ainsi qu'une hausse de la résistance au roulement, ce qui n'est pas non plus souhaitable si on souhaite réduire les nuisances sonores et la consommation énergétique du véhicule.

Ainsi, une autre solution envisagée par les manufacturiers pneumatiques est, pour une dimension donnée et une version donnée d'un pneumatique, d'augmenter sa pression de gonflage recommandée. En effet, plus la pression est élevée, plus le pneumatique est capable de porter une charge élevée.

Néanmoins, l'utilisation d'une pression recommandée relativement élevée rigidifie le pneumatique et entraine une perte de confort pour les passagers du véhicule ce qui n'est évidemment pas souhaité par certains constructeurs automobiles dans les cas où le confort des passagers est prioritaire sur la charge pouvant être portée.

Un autre problème rencontré par les manufacturiers lors de la mise au point d'un pneumatique est la dissipation d'énergie et la température dans la structure que l'on peut mettre en évidence notamment dans le test décrit en annexe VII du Règlement n°30 de la CEE-ONU. En effet, en augmentant la charge appliquée à un pneumatique de façon à simuler l'ajout d'une masse correspondante aux batteries nécessaire à l'obtention de l'autonomie désirée, on a observé une augmentation importante de la dissipation d'énergie et une élévation de température aussi bien dans le bourrelet que dans l'épaule du pneumatique. Cette dissipation d'énergie est particulièrement importante dans des cas d'usage dans lesquels le pneumatique est gonflé à une pression inférieure à la pression recommandée pour le véhicule.

On connait de l'état de la technique des pneumatiques décrits dans EP0812708, EP1201462, XP55877447 et XP055799335.

L'invention a pour but de fournir un pneumatique capable de porter une charge plus importante que les pneumatiques existants sans impliquer nécessairement un accroissement de la pression recommandée du pneumatique tout en maitrisant la dissipation d'énergie et l'élévation de la température dans la structure du pneumatique, en particulier dans des cas de sous-gonflage, sans sacrifier l'habitabilité, la compacité et le confort du véhicule.

Ainsi, l'invention a pour objet un pneumatique pour véhicule de tourisme comprenant un sommet, deux bourrelets, deux flancs reliant chaque bourrelet au sommet et une armature de carcasse ancrée dans chaque bourrelet, le sommet comprenant une armature de sommet et une bande de roulement, l'armature de carcasse s'étendant dans chaque flanc et dans le sommet radialement intérieurement à l'armature de sommet,
le pneumatique présentant un indice de charge LI tel que LI ≥ LI'+1 et LI' étant l'indice de charge d'un pneumatique EXTRA LOAD présentant la même dimension selon le manuel de la norme ETRTO 2019,
le pneumatique présentant une hauteur de flanc H définie par H=SW x AR / 100 avec SW la largeur de section nominale et AR le rapport d'aspect nominal du pneumatique selon le manuel de la norme ETRTO 2019 telle que H < 95, et
l'armature de carcasse comprenant une unique couche de carcasse.

Conformément à l'invention, le pneumatique est un pneumatique pour véhicule de tourisme. Un tel pneumatique est par exemple défini dans le manuel de la norme ETRTO 2019 (European Tyre and Rim Technical Organisation). Un tel pneumatique présente, généralement sur au moins un des flancs, un marquage conforme au marquage du manuel de la norme ETRTO 2019 indiquant la dimension du pneumatique sous la forme X/Y α V U β avec X désignant la largeur de section nominale, Y désignant le rapport d'aspect nominal, α désignant la structure et pouvant être R ou ZR, V désignant le diamètre de jante nominale, U désignant l'indice de charge et β désignant le symbole de vitesse.

L'indice de charge LI' est l'indice de charge d'un pneumatique présentant la même dimension, c'est-à-dire la même largeur de section nominale, le même rapport d'aspect nominal, la même structure (R et ZR étant considérée comme identique) et le même diamètre de jante nominale. L'indice de charge LI' est donné par le manuel de la norme ETRTO 2019, notamment dans la Partie intitulée Passenger Car Tyres - Tyres with Metric Designation, pages 20 à 41.

En augmentant l'indice de charge du pneumatique de l'invention par rapport à l'indice de charge d'un pneumatique présentant la même dimension dans sa version EXTRA-LOAD, l'invention permet d'augmenter la capacité de charge de l'ensemble monté sans pour autant modifier l'habitabilité, la compacité et le confort du véhicule sur lequel il est utilisé. En effet, la dimension du pneumatique selon l'invention étant identique à celle du pneumatique dans sa version EXTRA-LOAD, l'ensemble monté n'encombre pas davantage que le pneumatique dans sa version EXTRA-LOAD. Un pneumatique selon l'invention pourra porter un marquage distinctif permettant de le distinguer de sa version STANDARD LOAD et de sa version EXTRA-LOAD, par exemple un marquage du type HL (pour HIGH LOAD) ou XL+ (pour EXTRA LOAD +). Un tel marquage est notamment divulgué dans le manuel de la norme ETRTO 2021, page 3 de la section General Notes - Passenger Car tyres pour désigner des pneumatiques de type HIGH LOAD CAPACITY. Des exemples de dimensions sont également divulgués dans le manuel de la norme ETRTO 2021, page **44,** paragraphe 9.1 de la section Passenger Car tyres - Tyres with metric designation.

Une armature de carcasse comprenant une unique couche de carcasse conforme à l'invention permet d'obtenir un pneumatique avec une dissipation d'énergie et une température de fonctionnement optimales, notamment à forte charge et sous une pression inférieure ou égale à la pression recommandée pour un pneumatique de même dimension dans sa version STANDARD LOAD ou EXTRA-LOAD. En effet, contrairement à une armature de carcasse comprenant deux couches de carcasse dans laquelle la flexion de chaque flanc entraine une mise en compression relativement importante de la couche de carcasse la plus axialement à l'intérieur dans le flanc et à l'épaule du pneumatique et un accroissement de la dissipation d'énergie, l'unique couche de carcasse présente une mise en compression moindre dans le flanc et à l'épaule et donc conduit à une température de fonctionnement moindre et plus optimale.

En particulier, il est essentiel de contrôler cette température de fonctionnement dans les cas de sous-gonflage qui sont fréquemment et chroniquement rencontrés. En effet, il est connu qu'un sous-gonflage conduise à une hausse de la température de fonctionnement des flancs dans le cas de pneumatiques dans leur version STANDARD LOAD ou EXTRA-LOAD. Dans le cas d'un pneumatique de type HIGH LOAD CAPACITY, un sous-gonflage est encore plus problématique et conduit à une hausse amplifiée de la température de fonctionnement des flancs en raison de la charge très élevée que porte le pneumatique.

Par unique couche de carcasse, on comprend que l'armature de carcasse est, à l'exception de la couche de carcasse, dépourvue de toute couche renforcée par des éléments de renfort filaires. Les éléments de renfort filaires de telles couches renforcées exclues de l'armature de carcasse du pneumatique comprennent les éléments de renfort filaires métalliques et les éléments de renfort filaires textiles. De façon très préférentielle, l'armature de carcasse est constituée par l'unique couche de carcasse.

L'unique couche de carcasse est délimitée axialement par deux bords axiaux de l'unique couche de carcasse et comprend des éléments de renfort filaires de carcasse s'étendant axialement d'un bord axial à l'autre bord axial de la couche de carcasse.

Conformément à l'invention, la hauteur de flanc H est telle que H < 95. Les pneumatiques présentant une hauteur de flanc relativement réduite présentent une mise en compression relativement élevée de l'armature de carcasse et ce d'autant plus que la charge portée est élevée, ce qui est le cas des pneumatiques présentant un indice de charge LI conforme à l'invention. Ainsi, l'utilisation d'une unique couche de carcasse en combinaison avec une hauteur de flanc H < 95 est une caractéristique essentielle de l'invention.

La largeur de section nominale SW et le rapport d'aspect nominal AR sont ceux du marquage de la dimension inscrite sur le flanc du pneumatique et conformes au manuel de la norme ETRTO 2019.

Le pneumatique selon l'invention présente une forme sensiblement torique autour d'un axe de révolution sensiblement confondu avec l'axe de rotation du pneumatique. Cet axe de révolution définit trois directions classiquement utilisées par l'homme du métier : une direction axiale, une direction circonférentielle et une direction radiale.

Par direction axiale, on entend la direction sensiblement parallèle à l'axe de révolution du pneumatique ou de l'ensemble monté, c'est-à-dire l'axe de rotation du pneumatique ou de l'ensemble monté.

Par direction circonférentielle, on entend la direction qui est sensiblement perpendiculaire à la fois à la direction axiale et à un rayon du pneumatique ou de l'ensemble monté (en d'autres termes, tangente à un cercle dont le centre est sur l'axe de rotation du pneumatique ou de l'ensemble monté).

Par direction radiale, on entend la direction selon un rayon du pneumatique ou de l'ensemble monté, c'est-à-dire une direction quelconque coupant l'axe de rotation du pneumatique ou de l'ensemble monté et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan circonférentiel équatorial du pneumatique, on entend, dans un plan de coupe méridien, le plan passant par l'équateur du pneumatique, perpendiculaire au plan médian et à la direction radiale. L'équateur du pneumatique est, dans un plan de coupe méridien (plan perpendiculaire à la direction circonférentielle et parallèle aux directions radiale et axiales) l'axe parallèle à l'axe de rotation du pneumatique et située à équidistance entre le point radialement le plus extérieur de la bande de roulement destiné à être au contact avec le sol et le point radialement le plus intérieur du pneumatique destiné à être en contact avec un support, par exemple une jante.

Par plan méridien, on entend un plan parallèle à et contenant l'axe de rotation du pneumatique ou de l'ensemble monté et perpendiculaire à la direction circonférentielle.

Par radialement intérieur, respectivement radialement extérieur, on entend plus proche de l'axe de rotation du pneumatique, respectivement plus éloigné de l'axe de rotation du pneumatique. Par axialement intérieur, respectivement axialement extérieur, on entend plus proche du plan médian du pneumatique, respectivement plus éloigné du plan médian du pneumatique.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans certains modes de réalisation optionnels mais néanmoins avantageux, 90 ≤ H < 95. En effet, ces modes de réalisation présentent des flancs relativement haut dans la plage des hauteurs de flancs couvertes par l'invention et pour lesquels l'utilisation d'une unique couche de carcasse est particulièrement avantageuse car elle permet de réduire significativement la masse du pneumatique et la résistance au roulement par rapport à un pneumatique comprenant deux couches de carcasse.

Dans un mode de réalisation avantageux, LI'+1 ≤ LI ≤ LI'+4, de préférence LI'+2 ≤ LI ≤ LI'+4. Ainsi, on augmente davantage la capacité de chargement du pneumatique.

Dans un premier mode de réalisation permettant un ancrage de l'armature de carcasse par retournement selon l'invention, l'unique couche de carcasse forme un enroulement autour d'un élément de renforcement circonférentiel de chaque bourrelet de sorte qu'une portion axialement intérieure de l'unique couche de carcasse est agencée axialement à l'intérieur d'une portion axialement extérieure de l'unique couche de carcasse et de sorte que chaque extrémité axiale de l'unique couche de carcasse soit agencée radialement à l'extérieur de chaque élément de renforcement circonférentiel.

Dans certaines variantes de ce mode de réalisation, chaque extrémité axiale de l'unique couche de carcasse est agencée radialement à l'intérieur de l'équateur du pneumatique et selon l'invention agencée à une distance radiale inférieure ou égale à 30 mm d'une extrémité radialement intérieure de chaque élément de renforcement circonférentiel de chaque bourrelet.

En agençant chaque extrémité axiale de l'unique couche de carcasse enroulée à l'intérieur de l'équateur du pneumatique, on réduit significativement la masse de l'armature de carcasse. En outre, l'immense majorité des jantes actuellement utilisées pour des pneumatiques pour véhicule de tourisme présente des crochets de type J dont la hauteur est, dans tous les cas inférieure à 30 mm. L'agencement très préférentiel de chaque extrémité axiale dans une zone correspondant radialement sensiblement au crochet de jante permet de protéger mécaniquement chaque extrémité axiale. En effet, si chaque extrémité axiale était agencée radialement trop au-dessus de chaque élément de renforcement circonférentiel de chaque bourrelet, c'est-à-dire à une distance radiale strictement supérieure à 30 mm de l'extrémité radialement intérieure de chaque élément de renforcement circonférentiel, chaque extrémité axiale se retrouverait alors dans une zone flexible du pneumatique soumise à de trop fortes sollicitations, sollicitations qui sont particulièrement importantes dans le cas d'un pneumatique de type HIGH LOAD CAPACITY.

Dans un deuxième mode de réalisation et selon l'invention, le pneumatique comprenant un ancrage de l'armature de carcasse sans retournement, l'unique couche de carcasse présente une portion agencée axialement entre deux éléments de renforcement circonférentiels de chaque bourrelet et chaque extrémité axiale de l'unique couche de carcasse est agencée radialement à l'intérieur de chaque extrémité radialement extérieure de chaque élément de renforcement circonférentiel de chaque bourrelet. Un tel mode d'ancrage de l'armature de carcasse est décrit par exemple dans les documents WO2005/113259 ou bien WO2021/123522.

Le choix de l'ancrage de l'armature de carcasse se fera notamment en fonction de la hauteur de flanc H et de l'indice LI. En effet plus la hauteur de flanc H sera faible et l'indice de charge élevé, plus on privilégiera le deuxième mode de réalisation d'ancrage. Dans les cas où la hauteur de flanc H est élevée et l'indice de charge faible, on pourra indifféremment choisir le premier ou le deuxième mode de réalisation d'ancrage.

De façon optionnelle, l'unique couche de carcasse est délimitée axialement par deux bords axiaux de la couche de carcasse et comprend des éléments de renfort filaires textiles de carcasse s'étendant axialement d'un bord axial à l'autre bord axial de la couche de carcasse selon une direction principale formant, avec la direction circonférentielle du pneumatique un angle allant, en valeur absolue, de 80° à 90°.

Par élément filaire, on entend un élément présentant une longueur au moins 10 fois plus grande que la plus grande dimension de sa section quelle que soit la forme de cette dernière : circulaire, elliptique, oblongue, polygonale, notamment rectangulaire ou carrée ou ovale. Dans le cas d'une section rectangulaire, l'élément filaire présente la forme d'une bande.

Par textile, on entend un élément filaire comprenant un ou plusieurs monofilaments élémentaires textiles éventuellement revêtu d'une ou plusieurs couches d'un revêtement à base d'une composition adhésive. Ce ou ces monofilaments élémentaires textiles est ou sont obtenus, par exemple, par filage au fondu, filage en solution ou filage de gel. Chaque monofilament élémentaire textile est réalisé dans un matériau organique, notamment polymérique, ou inorganique, comme par exemple le verre ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne.

De préférence, chaque élément de renfort filaire textile de carcasse comprend un assemblage d'au moins deux brins multifilamentaires et présentant un titre total supérieur ou égal à 475 tex.

En effet, de façon à ce que l'unique couche de carcasse présente une résistance mécanique suffisante, on utilisera des éléments de renfort filaires textiles de carcasse présentant un titre relativement élevé, ce qui, pour un matériau donné, permet d'atteindre une résistance mécanique relativement élevée.

De façon avantageuse, chaque élément de renfort filaire textile de carcasse présente un diamètre moyen D ≥ 0,85 mm, de préférence D ≥ 0,90 mm.

Egalement de façon avantageuse, D ≤ 1,10 mm, de préférence D ≤ 1,00 mm.

Les titres (ou densité linéique) de chaque brin et élément de renfort filaire sont déterminés selon la norme ASTM D 885/D 885M - 10a de 2014. Le titre est donné en tex (poids en grammes de 1000 m de produit - rappel: 0, 111 tex égal à 1 denier).

Le diamètre de chaque élément de renfort filaire textile de carcasse est le diamètre du cercle le plus petit dans lequel est circonscrit l'élément de renfort filaire textile de carcasse. Le diamètre moyen est la moyenne des diamètres des éléments de renfort filaires textiles de carcasse situés sur une longueur de 10 cm de chaque couche de carcasse.

Chaque brin multifilamentaire est choisi parmi un brin multifilamentaire de polyester, un brin multifilamentaire de polyamide aromatique et un brin multifilamentaire de polyamide aliphatique, de préférence chaque brin multifilamentaire est choisi parmi un brin multifilamentaire de polyester et un brin multifilamentaire de polyamide aromatique.

Par brin multifilamentaire en polyester, on comprend un brin multifilamentaire constitué de monofilaments de macromolécules linéaires formées de groupes liés entre eux par des liaisons esters. Les polyesters sont fabriqués par polycondensation par estérification entre un diacide carboxylique ou l'un de ses dérivés et un diol. Par exemple, le polyéthylène téréphtalate peut être fabriqué par polycondensation de l'acide téréphtalique et de l'éthylène glycol. Parmi les polyesters connus, on pourra citer le polyéthylène téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN).

Par brin multifilamentaire en polyamide aromatique, on comprend un brin multifilamentaire constitué de monofilaments de macromolécules linéaires formées de groupes aromatiques liés entre eux par des liaisons amides dont au moins 85% sont directement liées à deux noyaux aromatiques, et plus particulièrement de fibres en poly (p-phénylène téréphtalamide) (ou PPTA), fabriquées depuis fort longtemps à partir de compositions de filage optiquement anisotropes. Parmi les polyamides aromatiques, on pourra citer les polyarylamides (ou PAA, notamment connu sous la dénomination commerciale Ixef de la société Solvay), le poly(métaxylylène adipamide), les polyphtalamides (ou PPA, notamment connu sous la dénomination commerciale Amodel de la société Solvay), les polyamides semi-aromatiques amorphes (ou PA 6-3T, notamment connu sous la dénomination commerciale Trogamid de la société Evonik), les para-aramides (ou poly(paraphénylène téréphtalamide ou PA PPD-T notamment connu sous la dénomination commerciale Kevlar de la société Du Pont de Nemours ou Twaron de la société Teijin).

Par brin multifilamentaire en polyamide aliphatique, on comprend un brin multifilamentaire constitué de monofilaments de macromolécules linéaires de polymères ou copolymères contenant des fonctions amides ne présentant pas de cycles aromatiques et pouvant être synthétisés par polycondensation entre un acide carboxylique et une amine. Parmi les polyamides aliphatiques, on pourra citer les nylons PA4.6, PA6, PA6.6 ou encore PA6.10, et notamment le Zytel de la société DuPont, le Technyl de la société Solvay ou le Rilsamid de la société Arkema.

De façon très préférée, l'assemblage est choisi parmi un assemblage de deux brins multifilamentaires de polyester et un assemblage d'un brin multifilamentaire de polyester et d'un brin multifilamentaire de polyamide aromatique.

Dans des modes de réalisation préférés, le pneumatique présente une largeur de section nominale SW allant de 205 à 315, un rapport d'aspect nominal allant de 25 à 55, un diamètre de jante nominale allant de 17 à 23 et un indice de charge LI allant de 98 à 116, de préférence une largeur de section nominale SW allant de 225 à 315, un rapport d'aspect nominal allant de 25 à 55, un diamètre de jante nominale allant de 18 à 23 et un indice de charge LI allant de 98 à 116, et plus préférentiellement une largeur de section nominale SW allant de 245 à 315, un rapport d'aspect nominal allant de 30 à 45, un diamètre de jante nominale allant de 18 à 23 et un indice de charge LI allant de 98 à 116. Comme expliqué précédemment, les pneumatiques selon l'invention sont destinés à porter des charges relativement élevées conduisant nécessairement à une usure relativement élevée par rapport aux pneumatiques de mêmes dimensions dans leur version EXTRA LOAD. Ainsi, il est particulièrement avantageux d'utiliser des pneumatiques dont la largeur de section nominale est relativement élevée afin de réduire la pression exercée sur la bande de roulement et donc l'usure.

Avantageusement, 0,82≤H/LI≤0,92. Ainsi, on applique préférentiellement l'invention à des pneumatiques susceptibles de fléchir de façon relativement importante car présentant un indice de charge relativement élevé pour une hauteur de flanc donné, c'est-à-dire satisfaisant H/LI≤0,92. Ceci est rendu possible par la présence d'une unique couche de carcasse qui permet de réduire la dissipation d'énergie malgré un fléchissement significatif du flanc. Néanmoins, si le flanc est trop court par rapport à l'indice de charge, c'est-à-dire satisfaisant H/LI<0,82, la flexion du flanc entraine une mise en compression relativement importante de l'unique couche de carcasse et donc un accroissement de la dissipation d'énergie.

Des modes de réalisation particulièrement préférés sont ceux dans lesquels le pneumatique présente une dimension et un indice de charge LI choisi parmi les dimensions et les indices de charge suivants: 205/40R17 88, 205/40ZR17 88, 255/35R18 98, 255/35ZR18 98, 245/35R20 98, 245/35ZR20 98, 265/35R20 102, 265/35ZR20 102, 245/35R21 99, 245/35ZR21 99, 255/35R21 101, 255/35ZR21 101, 265/35R21 103, 265/35ZR21 103, 285/30R21 103, 285/30ZR21 103, 315/30R21 109, 315/30ZR21 109, 315/30R23 111, 315/30ZR23 111.

Dans des modes de réalisation, l'armature de sommet comprend une armature de travail comprenant une couche de travail radialement intérieure et une couche de travail radialement extérieure agencée radialement à l'extérieur de la couche de travail radialement intérieure.

Dans des modes de réalisation, chaque couche de travail est délimitée axialement par deux bords axiaux de ladite couche de travail et comprend des éléments de renfort filaires de travail s'étendant axialement d'un bord axial à l'autre bord axial de ladite couche de travail les uns sensiblement parallèlement aux autres.

De façon optionnelle, chaque élément de renfort filaire de travail s'étend selon une direction principale formant, avec la direction circonférentielle du pneumatique, un angle, en valeur absolue, strictement supérieur à 10°, de préférence allant de 15° à 50° et plus préférentiellement allant de 20° à 35°.

De façon préférée, dans les modes de réalisation dans lesquels l'armature de travail comprend une couche de travail radialement la plus intérieure et une couche de travail radialement la plus extérieure agencée radialement à l'extérieur de la couche de travail radialement la plus intérieure, la direction principale selon laquelle s'étend chaque élément de renfort filaire de travail de la couche de travail radialement la plus intérieure et la direction principale selon laquelle s'étend chaque élément de renfort filaire de travail de la couche de travail radialement la plus extérieure forment, avec la direction circonférentielle du pneumatique, des angles d'orientations opposées.

De façon optionnelle, l'armature de sommet comprend une armature de frettage délimitée axialement par deux bords axiaux de l'armature de frettage et comprenant au moins un élément de renfort filaire de frettage enroulé circonférentiellement hélicoïdalement de façon à s'étendre axialement entre les bords axiaux de l'armature de frettage.

De façon préférée, l'armature de frettage est agencée radialement à l'extérieur de l'armature de travail.

De façon préférée, le ou chaque élément de renfort filaire de frettage s'étend selon une direction principale formant, avec la direction circonférentielle du pneumatique, un angle, en valeur absolue, inférieur ou égal à 10°, de préférence inférieur ou égal à 7° et plus préférentiellement inférieur ou égal à 5°.

L'invention a également pour objet un ensemble monté comprenant :
- un support de montage comprenant une jante, et
- un pneumatique tel que défini ci-dessus monté sur la jante.

Avantageusement, l'armature de sommet étant agencée radialement entre la bande de roulement et l'armature de carcasse et comprenant une armature de travail comprenant au moins une couche de travail axialement la moins large, la couche de travail axialement la moins large présentant une largeur axiale T2 exprimée en mm, et la jante présentant une largeur de jante A selon le manuel de la norme ETRTO 2019, et exprimée en mm, le rapport T2/A est tel que T2/A ≤ 1,00.

Afin de maitriser les dissipations d'énergie et la température dans la structure lors du fonctionnement du pneumatique conforme à l'invention, il est préférable de dimensionner correctement la largeur axiale de la couche de travail axialement la moins large par rapport à la largeur de la jante. En effet, dans le cas d'une forte charge au-delà de celle connue de l'état de la technique, la flèche du pneumatique, c'est-à-dire la différence entre le rayon de l'ensemble monté en absence de charge et le rayon de l'ensemble monté sous cette charge, est considérablement augmentée. Cette augmentation de la flèche entraine une dissipation d'énergie et une élévation de la température relativement importantes dans la structure du pneumatique, notamment dans le bourrelet.

Afin de maitriser cela, on préfèrera rectifier le flanc du pneumatique, c'est-à-dire rendre le flanc plus droit selon la direction radiale, et ce dans le but d'augmenter la rigidité radiale du pneumatique pour éviter une trop forte flexion du pneumatique et l'augmentation de la dissipation d'énergie et de la température dans la structure du pneumatique. On préconise donc de réduire le rapport T2/A à une valeur inférieure ou égale à 1,00 afin:
- pour une largeur de jante A donnée, de réduire la largeur axiale T2 de la couche de travail axialement la moins large ce qui entraine une réduction de la largeur de l'aire de contact et donc une rectification radiale du flanc du pneumatique,
- pour une largeur axiale T2 de la couche de travail axialement la moins large donnée d'augmenter la largeur de jante A ce qui entraine également une rectification radiale du flanc du pneumatique.

Dans le cas où l'homme du métier fait varier la largeur axiale T2 de la couche de travail axialement la moins large, l'homme du métier adaptera les caractéristiques du sommet du pneumatique, notamment celles de l'armature de sommet comprenant l'armature de travail et une éventuelle armature de frettage, ainsi que celles de la bande de roulement en fonction de la largeur axiale T2 qu'il aura déterminée.

Dans les deux cas, on augmente la rigidité radiale du pneumatique, donc on réduit la flèche du pneumatique pour une charge donnée ce qui permet de compenser au moins en partie l'impact de l'augmentation de la charge et on réduit ainsi les contraintes exercées sur la structure du pneumatique et donc la dissipation d'énergie et l'élévation de température lors du fonctionnement du pneumatique.

Afin de limiter l'augmentation des masses en rotation sur le véhicule mais également afin de réduire l'encombrement de l'ensemble monté pour favoriser l'habitabilité et la compacité du véhicule, on privilégiera le fait de réduire la largeur axiale T2 de la couche de travail axialement la moins large plutôt que d'augmenter la largeur de jante A.

La largeur axiale de la couche de travail axialement la moins large est mesurée sur une coupe de pneumatique dans un plan méridien et correspond à la largeur selon la direction axiale entre les deux extrémités axiales de la couche de travail.

De façon préférée, la couche de travail axialement la moins large est la couche de travail radialement extérieure de l'armature de travail.

Dans des modes de réalisation également avantageux, 0,85 ≤ T2/A, de préférence 0,90 ≤ T2/A et plus préférentiellement 0,93 ≤ T2/A ≤ 0,97.

Il est préférable d'avoir un rapport T2/A qui ne soit pas trop petit. En effet, pour une largeur de jante A donnée, il est préférable de ne pas trop réduire la valeur de la largeur axiale T2 de la couche de travail axialement la moins large au risque de réduire la rigidité de flexion sur chants et donc la rigidité de dérive à forte dérive. En outre, en réduisant trop la valeur de la largeur axiale T2 de la couche de travail axialement la moins large, on réduit la largeur de l'aire de contact ce qui augmente la pression exercée sur la bande de roulement et donc l'usure, cette usure étant amplifiée par le fait que les pneumatiques selon l'invention sont destinés à porter des charges relativement élevées conduisant nécessairement à une usure élevée, en tous cas plus élevée que des pneumatiques de même dimension dans leur version EXTRA LOAD amenés à porter des charges moindres. Pour une largeur axiale T2 de la couche de travail axialement la moins large donnée, il est également préférable de ne pas trop augmenter la valeur de la largeur de jante A afin, comme expliqué ci-dessus, de limiter l'augmentation des masses en rotation sur le véhicule mais également afin de réduire l'encombrement de l'ensemble monté pour favoriser l'habitabilité et la compacité du véhicule.

Dans des modes de réalisation préférés, le pneumatique présente une largeur de section nominale SW telle que T2 ≥ SW - 75, de préférence T2 ≥ SW - 70. Pour une largeur de section nominale donnée, la couche de travail axialement la moins large qui définit principalement la largeur de l'aire de contact n'est pas trop réduite. En effet, comme expliqué ci-dessus, cela permet de conserver une bonne performance en usure du pneumatique et ce malgré le fait que les pneumatiques sont destinés à porter des charges relativement élevées conduisant nécessairement à une usure relativement élevée.

Dans des modes de réalisation préférés, le pneumatique présente une largeur de section nominale SW telle que T2 ≤ SW - 27, de préférence T2 ≤ SW - 30.

Dans ces modes de réalisation tout comme dans l'invention d'une manière générale, la largeur de section nominale est celle du marquage de la dimension inscrite sur le flanc du pneumatique.

De façon à réduire le risque de voir le pneumatique monté sur une jante dont la largeur de jante serait trop petite et entrainerait une flexion relativement forte de l'épaule du pneumatique, on préfèrera limiter les jantes utilisables avec le pneumatique. Ainsi, la jante est choisie parmi :
- une jante présentant un code de largeur de jante égal au code de largeur de la jante de mesure pour la dimension du pneumatique et définie selon le manuel de la norme ETRTO 2019, et
- une jante présentant un code de largeur de jante égal au code de largeur de la jante de mesure pour la dimension du pneumatique minoré de 0,5, et
- une jante présentant un code de largeur de jante égal au code de largeur de la jante de mesure pour la dimension du pneumatique majoré de 0,5.

La jante de mesure est notamment définie aux pages 20 à 41 de la partie Passenger Car Tyres - Tyres with Metric Designation du manuel de la norme ETRTO 2019.

De façon préférée, afin de limiter l'augmentation des masses en rotation sur le véhicule mais également afin de réduire l'encombrement de l'ensemble monté pour favoriser l'habitabilité et la compacité du véhicule, la jante présente un code de largeur de jante égal au code de largeur de la jante de mesure pour la dimension du pneumatique minoré de 0,5.

Avantageusement, le pneumatique est gonflé à une pression allant de 200 à 350 kPa, de préférence de 250 à 330 kPa. La pression est celle de l'ensemble monté à 25°C sans que le pneumatique n'ai roulé. Elle correspond souvent à une des pressions de gonflage recommandées par les constructeurs automobiles.

Dans des usages dans lesquels on souhaitera privilégier la capacité de charge du pneumatique, on utilisera une pression relativement élevée et supérieure ou égale à 270 kPa.

Dans des usages dans lesquels on souhaitera privilégier le confort des passagers et le comportement du véhicule, notamment l'adhérence sur sol sec, on utilisera une pression relativement faible et inférieure ou égale à 270 kPa.

L'invention a encore pour objet un véhicule de tourisme comprenant au moins un pneumatique ou un ensemble monté tel que défini ci-dessus.

L'invention sera mieux comprise à la lecture de la description qui va suivre, donnée uniquement à titre d'exemple non limitatif et faite en se référant aux dessins dans lesquels:
- la figure 1 est une vue, dans un plan de coupe méridien, d'un ensemble monté selon un premier mode de réalisation de l'invention,
- la figure 2 est une vue, dans un plan de coupe méridien, du pneumatique de l'ensemble monté de la figure 1,
- la figure 3 est une vue en coupe selon le plan III-III' de la figure 2 illustrant l'armature de carcasse du pneumatique de la figure 1, et
- la figure 4 est une vue analogue à celle de la figure 1 comparant la flèche d'un ensemble monté de l'état de la technique et celle de l'ensemble monté de la figure 1.

Sur les figures, on a représenté un repère X, Y, Z correspondant aux directions habituelles respectivement axiale (Y), radiale (Z) et circonférentielle (X) d'un pneumatique ou d'un ensemble monté.

Dans la description qui suit, les mesures réalisées sont réalisées sur un pneumatique non chargé et non gonflé ou sur une coupe de pneumatique dans un plan méridien.

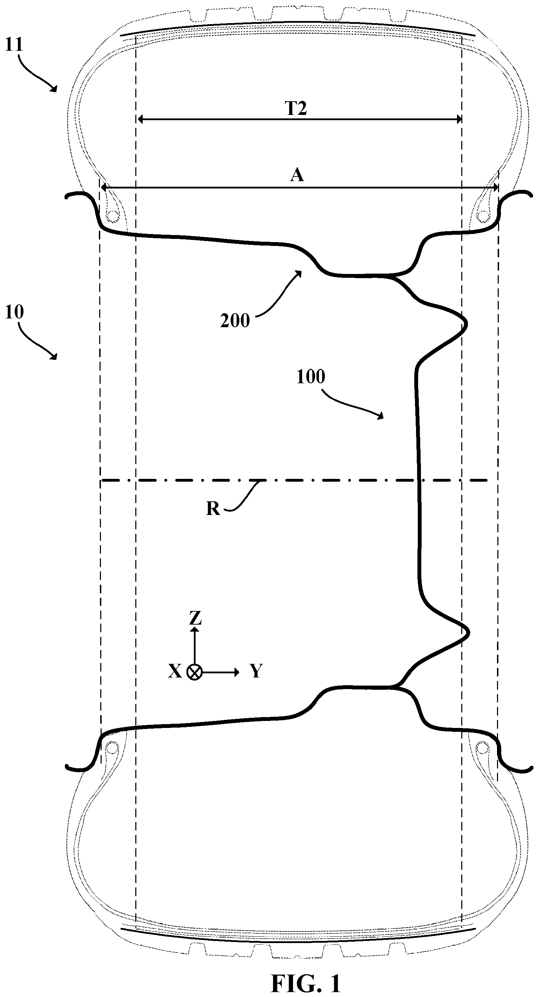

On a représenté sur la figure 1 un ensemble monté conforme à l'invention et désigné par la référence générale 10. L'ensemble monté 10 comprend un pneumatique 11 et un support de montage 100 comprenant une jante 200. Le pneumatique 11 est ici gonflé à une pression allant de 200 à 350 kPa, de préférence de 250 à 330 kPa et ici égale à 270 kPa.

Le pneumatique 11 présente une forme sensiblement torique autour d'un axe de révolution R sensiblement parallèle à la direction axiale Y. Le pneumatique 11 est destiné à un véhicule de tourisme. Sur les différentes figures, le pneumatique 11 est représenté à l'état neuf, c'est-à-dire n'ayant pas encore roulé.

Le pneumatique 11 comprend deux flancs 30 portant un marquage indiquant la dimension du pneumatique 11, ainsi qu'un indice de vitesse et un code de vitesse. En l'espèce, le pneumatique 11 présente une largeur de section nominale SW allant de 205 à 315, de préférence de 225 à 315, plus préférentiellement allant de 245 à 315 et ici égale à 255. Le pneumatique 11 présente également un rapport d'aspect nominal AR allant de 25 à 55, de préférence allant de 30 à 45 et ici égal à 35. Le pneumatique 11 présente un diamètre de jante nominale allant de 17 à 23, de préférence de 18 à 23 et ici égal à 18. Le pneumatique 11 présente donc une hauteur de flanc H définie par SW x AR / 100 =89 < 95.

Conformément à l'invention, le marquage comprend également un indice de charge LI allant de 98 à 116, tel que LI ≥ LI'+1 avec LI' étant l'indice de charge d'un pneumatique EXTRA LOAD présentant la même dimension selon le manuel de la norme ETRTO 2019. De préférence, LI'+1 ≤ LI ≤ LI'+4, et même LI'+2 ≤ LI ≤ LI'+4.

Un pneumatique présentant une dimension 255/35R18 dans sa version EXTRA LOAD présente un indice de charge égal à 94 comme cela est indiqué à la page 36 de la partie Passenger Car Tyres - Tyres with Metric Designation du manuel de la norme ETRTO 2019. Ainsi, l'indice de charge LI du pneumatique 11 est tel que LI ≥95, de préférence 95 ≤ LI ≤ 98 et même 96 ≤ LI ≤ 98 et ici LI=98. Cet indice de charge égal à 98 correspond bien à l'indice de charge d'un pneumatique HIGH LOAD CAPACITY de dimension 255/35R18 comme cela est indiqué dans le manuel ETRTO 2021. Ainsi, le pneumatique 11 est bien du type HIGH LOAD CAPACITY.

Le pneumatique 11 est tel que 0,82 ≤ H/LI ≤ 0,92 et ici H/LI=0,91.

Pour une telle dimension, le manuel de la norme ETRTO 2019 indique, page 36 de la partie Passenger Car Tyres - Tyres with Metric Designation, une jante de mesure présentant un code de largeur de jante égal à 9. La jante 200 de l'ensemble monté 10 est ainsi choisie parmi :
- une jante présentant un code de largeur de jante égal au code de largeur de la jante de mesure pour la dimension du pneumatique et définie selon le manuel de la norme ETRTO 2019, et
- une jante présentant un code de largeur de jante égal au code de largeur de la jante de mesure pour la dimension du pneumatique minoré de 0,5, et
- une jante présentant un code de largeur de jante égal au code de largeur de la jante de mesure pour la dimension du pneumatique majoré de 0,5.

Ici, la jante 200 de l'ensemble monté 10 est la jante présentant un code de largeur de jante égal au code de largeur de la jante de mesure pour la dimension du pneumatique minoré de 0,5 et donc ici égal à 8,5. La jante 200 présente un profil de type J et une largeur de jante A selon le manuel de la norme ETRTO 2019. En l'espèce, le profil de la jante 200 étant du type 8,5 J, sa largeur de jante A exprimée en mm est égale à 215,90 mm.

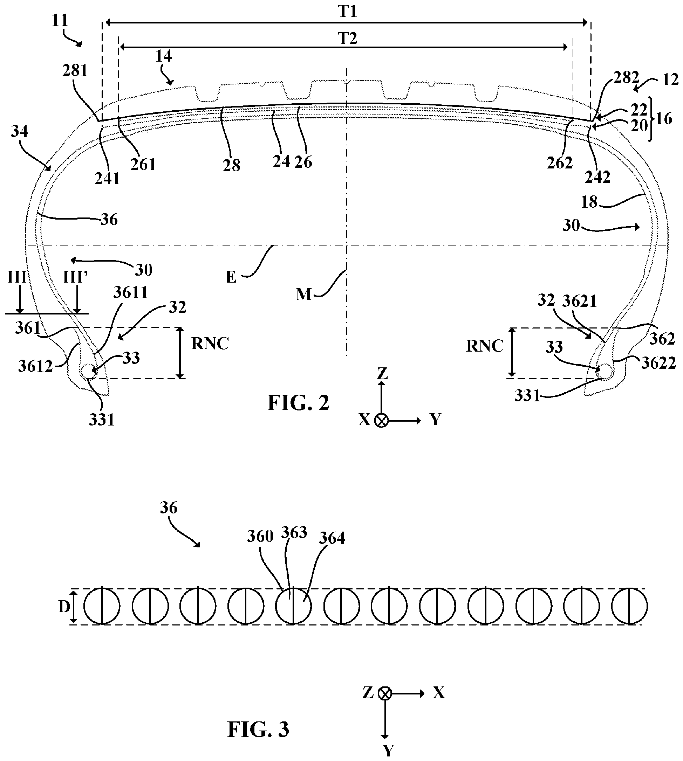

En référence à la figure 2, le pneumatique 11 comprend un sommet 12 comprenant une bande de roulement 14 destinée à entrer en contact avec un sol lors du roulage et une armature de sommet 16 s'étendant dans le sommet 12 selon la direction circonférentielle X. Le pneumatique 11 comprend également une couche d'étanchéité 18 à un gaz de gonflage étant destinée à délimiter une cavité interne fermée avec le support de montage 100 du pneumatique 11 une fois le pneumatique 11 monté sur le support de montage 100.

L'armature de sommet 16 comprend une armature de travail 20 et une armature de frettage 22. L'armature de travail 16 comprend au moins une couche de travail et ici comprend deux couches de travail comprenant une couche de travail 24 radialement intérieure agencée radialement à l'intérieur d'une couche de travail 26 radialement extérieure. Parmi les deux couches radialement intérieure 24 et radialement extérieure 26, la couche axialement la moins large est la couche radialement extérieure 26.

L'armature de frettage 22 comprend au moins une couche de frettage et comprend ici une couche de frettage 28.

L'armature de sommet 16 est surmontée radialement de la bande de roulement 14. Ici, l'armature de frettage 22, ici la couche de frettage 28, est agencée radialement à l'extérieur de l'armature de travail 20 et est donc radialement intercalée entre l'armature de travail 20 et la bande de roulement 14.

Les deux flancs 30 prolongent le sommet 12 radialement vers l'intérieur. Le pneumatique 11 comporte en outre deux bourrelets 32 radialement intérieurs aux flancs 30. Chaque flanc 30 relie chaque bourrelet 32 au sommet 12.

Le pneumatique 11 comprend une armature de carcasse 34 ancrée dans chaque bourrelet 32, en l'espèce forme un enroulement autour d'un élément de renforcement circonférentiel, ici une tringle 33. L'armature de carcasse 34 s'étend radialement dans chaque flanc 30 et axialement dans le sommet 12, radialement intérieurement à l'armature de sommet 16. L'armature de sommet 16 est agencée radialement entre la bande de roulement 14 et l'armature de carcasse 34. L'armature de carcasse 34 comprend au moins une couche de carcasse 36 et ici une unique couche de carcasse 36.

L'armature de frettage 22, ici la couche de frettage 28, est délimitée axialement par deux bords axiaux 281, 282 et comprend un ou plusieurs éléments de renfort filaires de frettage enroulés circonférentiellement hélicoïdalement entre chaque bord axial 281, 282 selon une direction principale formant, avec la direction circonférentielle X du pneumatique 10, un angle AF, en valeur absolue, inférieur ou égal à 10°, de préférence inférieur ou égal à 7° et plus préférentiellement inférieur ou égal à 5°. Ici, AF=-5°.

Chaque couche de travail radialement intérieure 24 et radialement extérieure 26 est délimitée axialement par deux bords axiaux respectivement 241, 242, 261, 262 de chaque couche de travail 24, 26. La couche de travail radialement intérieure 24 présente une largeur axiale T1=223,00 mm et la couche de travail radialement extérieure 26 présente une largeur axiale T2=209,00 mm faisant de la couche de travail radialement extérieure 26 la couche de travail axialement la moins large.

On notera que SW=255 et T2=209 satisfont les relations suivantes T2 ≥ SW - 75, de préférence T2 ≥ SW - 70 et T2 ≤ SW - 27, de préférence T2 ≤ SW - 30.

Comme cela est illustré sur la figure 1, l'ensemble monté 10 est tel que le pneumatique 11 présente des flancs rectifiés radialement. En effet, le rapport T2/A est tel que 0,85 ≤ T2/A ≤ 1,00, de préférence 0,90 ≤ T2/A ≤ 1,00, et plus préférentiellement 0,93 ≤ T2/A ≤ 0,97 et ici T2/A=0,97.

Chaque couche de travail 24, 26 comprend des éléments de renfort filaires de travail s'étendant axialement d'un bord axial 241, 261 à l'autre bord axial 242, 262 de chaque couche de travail 24, 26 les uns sensiblement parallèlement aux autres selon des directions principales formant avec la direction circonférentielle X du pneumatique 10, des angles respectivement AT1 et AT2 d'orientations opposées et en valeur absolue, strictement supérieurs à 10°, de préférence allant de 15° à 50° et plus préférentiellement allant de 20° à 35°. Ici, AT1=-26° et AT2=+26°.

L'unique couche de carcasse 36 est délimitée axialement par deux bords axiaux respectivement 361, 362 et comprend des éléments de renfort filaires textiles de carcasse respectivement 360 s'étendant axialement d'un bord axial 361 à l'autre bord axial 362 selon une direction principale D3 formant avec la direction circonférentielle X du pneumatique 10, un angle AC, en valeur absolue, allant de 80° à 90° et ici AC=+90°.

L'unique couche de carcasse 36 forme un enroulement autour de chaque élément de renforcement circonférentiel 33 de chaque bourrelet 32 de sorte qu'une portion axialement intérieure 3611, 3621 de la première couche de carcasse 36 est agencée axialement à l'intérieur d'une portion axialement extérieure 3612, 3622 de la première couche de carcasse 36 et de sorte que chaque extrémité axiale 361, 362 de la première couche de carcasse 36 soit agencée radialement à l'extérieur de chaque élément de renforcement circonférentiel 33.

Chaque extrémité axiale 361, 362 de l'unique couche de carcasse 36 est agencée radialement à l'intérieur de l'équateur E du pneumatique. Plus précisément, chaque extrémité axiale 361, 362 de la première couche de carcasse 36 est agencée à une distance radiale RNC inférieure ou égale à 30 mm d'une extrémité radialement intérieure 331 de chaque élément de renforcement circonférentiel 33 de chaque bourrelet 32. Ici RNC=23 mm.

Chaque couche de travail 24, 26, de frettage 28 et de carcasse 36 comprend une matrice de calandrage des éléments de renfort filaires de la couche correspondante. De préférence la matrice de calandrage est polymérique et plus préférentiellement élastomérique comme celles usuellement utilisées dans le domaine des pneumatiques.

Chaque élément de renfort filaire de frettage comprend classiquement deux brins multifilamentaires, chaque brin multifilamentaire étant constitué d'un filé de monofilaments de polyamide aliphatique, ici de nylon d'un titre égal à 140 tex, ces deux brins multifilamentaires étant mis en hélice individuellement à 250 tours par mètre dans un sens puis mis en hélice ensemble à 250 tours par mètre dans le sens opposé. Ces deux brins multifilamentaires sont enroulés en hélice l'un autour de l'autre. En variante, on pourra utiliser un élément de renfort filaire de frettage comprenant un brin multifilamentaire constitué d'un filé de monofilaments de polyamide aliphatique, ici de nylon d'un titre égal à 140 tex et un brin multifilamentaire constitué d'un filé de monofilaments de polyamide aromatique, ici d'aramide d'un titre égal à 167 tex, ces deux brins multifilamentaires étant mis en hélice individuellement à 290 tours par mètre dans un sens puis mis en hélice ensemble à 290 tours par mètre dans le sens opposé. Ces deux brins multifilamentaires sont enroulés en hélice l'un autour de l'autre. Dans encore une autre variante, on pourra utiliser un élément de renfort filaire de frettage comprenant deux brins multifilamentaires constitués chacun d'un filé de monofilaments de polyamide aromatique, ici d'aramide d'un titre égal à 330 tex et un brin multifilamentaire constitué d'un filé de monofilaments de polyamide aliphatique, ici de nylon d'un titre égal à 188 tex, chacun des brins multifilamentaires étant mis en hélice individuellement à 270 tours par mètre dans un sens puis mis en hélice ensemble à 270 tours par mètre dans le sens opposé. Ces trois brins multifilamentaires sont enroulés en hélice l'un autour de l'autre.

D'une manière générale, l'utilisation d'une forte charge entraine une diminution de la vitesse limite acceptable du pneumatique ainsi qu'une dégradation de son comportement, par exemple sa rigidité de dérive. Ainsi, en utilisant un ou des éléments de renfort filaires de frettage à haut module, par exemple comme ceux décrits dans les deux dernières variantes ci-dessus comprenant un ou plusieurs brins de polyamide aromatique, on peut augmenter la vitesse limite acceptable par le pneumatique et améliorer le comportement, notamment sa rigidité de dérive.

Chaque élément de renfort filaire de travail est un assemblage 4.26 de quatre monofilaments en acier et comprenant une couche interne de deux monofilaments et une couche externe de deux monofilaments enroulés ensemble en hélice autour de la couche interne au pas de 14,0 mm, par exemple dans le sens S. Un tel assemblage 4.26 présente une fore à rupture égale à 640 N, un diamètre égal à 0,7 mm. Chaque monofilament en acier présente un diamètre égal à 0,26 mm et une résistance mécanique égale à 3250 MPa. En variante, on pourra également utiliser un assemblage de six monofilaments en acier présentant un diamètre égal à 0,23 mm et comprenant une couche interne de deux monofilaments enroulés ensemble en hélice au pas de 12,5 mm dans un premier sens, par exemple le sens Z, et une couche externe de quatre monofilaments enroulés ensemble en hélice autour de la couche interne au pas de 12,5 mm dans un deuxième sens opposé au premier sens, par exemple le sens S.

Comme cela est représenté sur la figure 3, chaque élément de renfort filaire textile de carcasse 360 comprend un assemblage d'au moins deux brins multifilamentaires 363, 364. Chaque brin multifilamentaire 363, 364 est choisi parmi un brin multifilamentaire de polyester, un brin multifilamentaire de polyamide aromatique et un brin multifilamentaire de polyamide aliphatique, de préférence choisi parmi un brin multifilamentaire de polyester et un brin multifilamentaire de polyamide aromatique. En l'espèce, l'assemblage est choisi parmi un assemblage de deux brins multifilamentaires de polyester et un assemblage d'un brin multifilamentaire de polyester et d'un brin multifilamentaire de polyamide aromatique et ici est constitué de deux brins multifilamentaires de PET, ces deux brins multifilamentaires étant mis en hélice individuellement à 270 tours par mètre dans un sens puis mis en hélice ensemble à 270 tours par mètre dans le sens opposé. Chacun de ces brins multifilamentaires présente un titre égal à 334 tex de sorte que le titre total de l'assemblage soit supérieur ou égal à 475 tex et ici égal à 668 tex. Chaque élément de renfort filaire textile de carcasse 360 présente un diamètre moyen D, exprimé en mm tel que D ≥ 0,85 mm, de préférence D ≥ 0,90 mm et tel que D ≤ 1,10 mm, de préférence D ≤ 1,00 mm. En l'espèce, D=0,95 mm.

### TESTS COMPARATIFS

### Simulations de test de roulage

Dans une première simulation, afin de démonter l'intérêt de l'invention, les inventeurs ont simulé le roulage d'un pneumatique conforme à l'invention et présentant une hauteur de flanc H<95 et le roulage d'un pneumatique présentant une hauteur de flanc H≥95. Ces deux pneumatiques présentent des rapports T2/A sensiblement égaux.

On a simulé pour chaque pneumatique décrit ci-dessus un ensemble monté comprenant chaque pneumatique décrit ci-dessus monté sur un support de montage comprenant la jante de mesure pour la dimension du pneumatique et définie selon le manuel de la norme ETRTO 2019. Pour chacun de ces ensembles montés, on a réalisé une simulation d'un test de roulage analogue à l'essai de performance charge/vitesse décrit en annexe VII du Règlement n°30 de la CEE-ONU, mais dans des conditions encore plus sollicitantes.

Ainsi, on simule un pneumatique gonflé à une pression égale à 250 kPa sous une charge que doit normalement être capable de porter le pneumatique dans sa version EXTRA LOAD mais à une pression de 290 kPa conformément au manuel de la norme ETRTO 2019. Ainsi, ces conditions reproduisent un usage en surcharge et sous-gonflé du pneumatique.

Lors de ces simulations, on a relevé le maximum de la dissipation d'énergie volumique DNRJ de la matrice de calandrage d'une portion de l'unique couche de carcasse située dans le flanc, exprimée en daN/mm2. Plus cette valeur est élevée, plus la dissipation d'énergie par la structure du pneumatique est élevée et plus l'élévation de température est importante. On a rapporté ces valeurs à une valeur 100 en-dessous de laquelle la dissipation d'énergie est maitrisée et au-dessus de laquelle la dissipation d'énergie n'est pas suffisamment maitrisée. On a rassemblé ces valeurs dans le tableau 1 ci-dessous.

**Tableau 1**

| | Pneumatique avec H<95 | Pneumatique avec H≥95 |
|---|---|---|
| DNRJ | DNRJ < 100 | DNRJ >100 |

Ces tests montrent que l'utilisation d'une unique couche de carcasse en combinaison avec un flanc relativement court permet de maitriser la dissipation d'énergie dans la portion de l'armature de carcasse située dans le flanc et ce même sous une charge relativement élevée et avec une pression inférieure à la pression recommandée pour porter la charge correspondante.

### Simulations de courbure méridienne maximale

Dans une deuxième simulation, on a comparé des pneumatiques de dimensions 255/35 R21 et 275/30 R20 non conformes à l'invention et dont l'armature de carcasse comprend deux couches de carcasse. Chacun de ces pneumatiques présente une hauteur de flanc H<95.

Pour chacun de ces pneumatiques, on a mesuré la courbure méridienne maximale Cmax de la couche de carcasse axialement la plus intérieure lorsque le pneumatique est monté sur une jante présentant un code de largeur de jante égal au code de largeur de la jante de mesure définie selon le manuel de la norme ETRTO 2019 pour la dimension du pneumatique minoré de 0,5. Ces ensembles montés ont été simulés chargés à une charge supérieure à celle décrite dans l'essai de performance charge/vitesse décrit en annexe VII du Règlement n°30 de la CEE-ONU et gonflés à une pression inférieure à la pression recommandée pour porter la charge correspondante. Préalablement, on a déterminé que la limite de courbure méridienne maximale au-dessus de laquelle on observe une mise en compression relativement importante de la couche de carcasse la plus axialement à l'intérieur dans le flanc et un accroissement de la dissipation d'énergie était égale à 0,30 mm⁻¹.

**Tableau 2**

| | 255/35 R21 | 275/30 R20 |
|---|---|---|
| H | 89 | 83 |
| Cmax | 0.31 mm⁻¹ | 0.39 mm⁻¹ |

Ainsi, on observe que ces pneumatiques présentant une hauteur de flanc H strictement inférieure à 95 présentent une couche de carcasse la plus axialement à l'intérieur ayant une courbure supérieure au seuil maximal acceptable dans des conditions d'utilisation sous forte charge et en sous-gonflage.

On note également que plus la hauteur de flanc H augmente, plus la courbure diminue et se rapproche du seuil de 0,30 mm⁻¹ qui est atteint pour H=95.

### Simulations de mise en tension

Dans une troisième simulation, les inventeurs ont simulé la tension de chaque élément de renfort filaire de carcasse plusieurs pneumatiques. Pour chacun de ces tests, on a simulé la tension de chaque élément de renfort filaire de carcasse pour des pneumatiques gonflés à une pression égale à 2,8 bars et soumis à une charge bien plus importante que celle utilisée pour l'essai de performance charge/vitesse décrit en annexe VII du Règlement n°30 de la CEE-ONU.

On a simulé différents pneumatiques présentant les dimensions suivantes 255/35 R20, 235/60 R18, 255/60 R18 et ce avec des armatures de carcasse comprenant une unique couche de carcasse.

La tension de chaque élément de renfort filaire de carcasse est mesurée à l'extrémité de l'unique couche de carcasse.

On a rassemblé les résultats de ces simulations dans le tableau 3 ci-dessous.

**Tableau 3**

| Dimension | 255/35 R20 | 235/60 R18 | 255/60 R18 |
|---|---|---|---|
| H | 89 | 141 | 153 |
| Tension (daN) | 0,46 | 0.71 | 0.79 |

On note que pour des hauteurs de flanc supérieures ou égales à 95, la tension de l'armature de carcasse comprenant une unique couche de carcasse n'est plus maitrisée.

### Simulations de test de roulage

Dans une quatrième simulation, afin de démontrer l'intérêt de la rectification des flancs du pneumatique qui, bien qu'avantageuse est optionnelle dans le cadre de l'invention, on a simulé le roulage d'un pneumatique Pilot Sport 4 de la marque MICHELIN présentant la dimension 255/35R18 dans sa version EXTRA LOAD et présentant un indice de charge égal à 94 conformément à la norme ETRTO 2019. Ce pneumatique comprend une armature de sommet analogue à celle des pneumatiques décrits précédemment à la différence près que la valeur de T2 est égale à 226,00 mm.

On a simulé plusieurs ensembles montés comprenant le pneumatique décrit ci-dessus monté sur plusieurs supports de montage comprenant des jantes présentant trois codes de largeurs de jante différentes : 8,5, 9 et 10. Pour chacun de ces ensembles montés, on a réalisé une simulation d'un test de roulage analogue à l'essai de performance charge/vitesse décrit en annexe VII du Règlement n°30 de la CEE-ONU, mais dans des conditions encore plus sollicitantes et ce sous deux types de conditions différentes.

Avec le premier type de conditions reproduisant un usage du pneumatique dans sa version EXTRA-LOAD, on simule un pneumatique gonflé à une pression égale à 250 kPa sous une charge égale à 670 kg. On notera que la charge appliquée correspond à la charge que doit normalement être capable de porter le pneumatique mais à une pression de 290 kPa conformément au manuel de la norme ETRTO 2019. Ainsi, ces premières conditions reproduisent un usage sous-gonflé du pneumatique et donc particulièrement sollicitant.

Avec le deuxième type de conditions reproduisant un usage sous une charge bien plus élevée, on simule un pneumatique gonflé à une pression également égale à 250 kPa sous une charge égale à 750 kg. On notera que la charge appliquée correspond à la charge que doit normalement être capable de porter un pneumatique présentant un indice de charge 98 à une pression de 290 kPa conformément au manuel de la norme ETRTO 2019. Ainsi, ces deuxièmes conditions reproduisent un usage en surcharge et sous-gonflé du pneumatique et donc encore plus sollicitant que les premières conditions.

Lors de ces simulations, on a relevé, tout comme dans la première simulation, le maximum de la dissipation d'énergie volumique DRNJ de la matrice de calandrage d'une portion de l'unique couche de carcasse située dans le flanc, exprimée en daN/mm2. On a rapporté ces valeurs à une valeur relative 100, différente en valeur absolue de la valeur relative 100 de la première simulation, en-dessous de laquelle la dissipation d'énergie est maitrisée et au-dessus de laquelle la dissipation d'énergie n'est pas suffisamment maitrisée. On a rassemblé ces valeurs dans le tableau 4 ci-dessous. La mention NT signifie que l'ensemble monté n'a pas été testé.

**Tableau 4**

| A | T2/A | Résultat du test à P=250 kPa et sous une charge Z=670 kg | Résultat du test à P=250 kPa et sous une charge Z=750 kg |
|---|---|---|---|
| 8,5 | 1,05 | DNRJ >120 | NT |
| 9 | 0,98 | DNRJ <100 | DNRJ <100 |
| 10 | 0,89 | NT | DNRJ <50 |

Ces tests montrent que la diminution du rapport T2/A permet de maitriser la dissipation d'énergie dans la portion de l'unique couche de carcasse située dans le flanc et ce même sous une charge relativement élevée et avec une pression inférieure à la pression recommandée pour porter la charge correspondante. Ainsi, on pourra faire varier T2 et/ou A afin d'obtenir un rapport T2/A permettant de rectifier radialement les flancs et ainsi de réduire les contraintes exercées sur l'armature de carcasse.

### Test statique

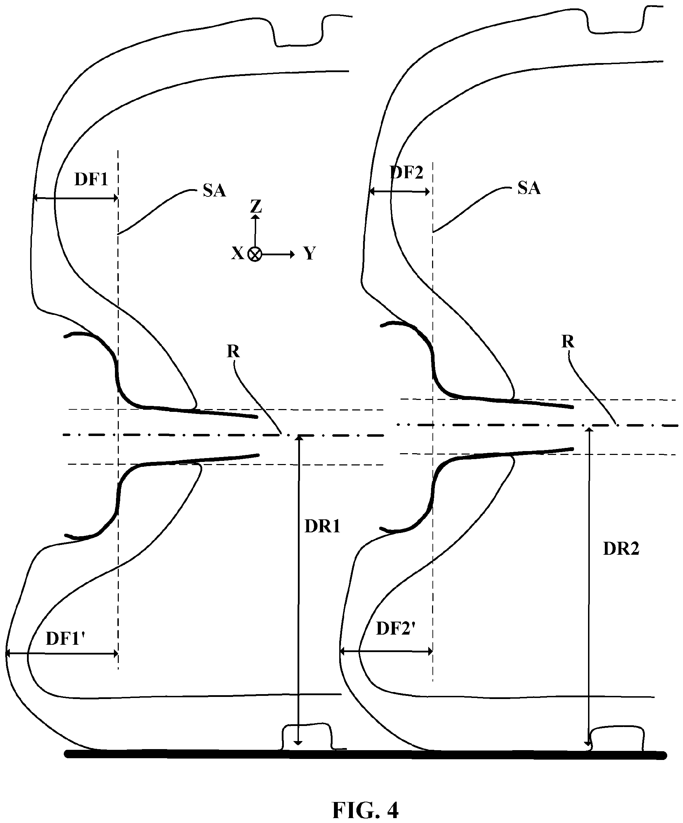

Afin d'illustrer l'effet de la rectification des flancs, qui, bien qu'avantageuse est optionnelle dans le cadre de l'invention, on a illustré sur la figure 4 le résultat d'un test statique d'écrasement d'un pneumatique de dimension 255/35R18 identique à celui décrit précédemment mais dans lequel le rapport T2/A est égal à 1,05 (pneumatique illustré à gauche) et le pneumatique décrit précédemment dont le rapport T2/A est égal à 0,97 (pneumatique illustré à droite). La charge appliquée sur chaque pneumatique est égale à 750 kg à une pression de 250 kPa.

On note que la flèche du pneumatique de gauche est bien supérieure à la flèche du pneumatique de droite. En effet, la distance DR1 de l'axe de rotation R au sol du pneumatique de gauche est inférieure à la distance DR2 de l'axe de rotation R au sol du pneumatique de droite.

On note en particulier que les flancs du pneumatique de droite sont radialement plus droits que les flancs du pneumatique de gauche. Cela est visible en comparant, à une même cote radiale de chaque flanc, les distances DF1 et DF2 entre la surface extérieure du flanc situé à l'opposé de l'aire de contact et le plan perpendiculaire SA à l'axe de rotation R du pneumatique et passant par la face d'appui de la jante délimitant la largeur axiale A de la jante. On peut également constater cela en comparant, à une même cote radiale de chaque flanc situé au droit de l'aire de contact, les distances DF1' et DF2' entre la surface extérieure du flanc et le plan perpendiculaire SA. On observe que DF1>DF2 et que DF1'>DF2'.

## Revendications

1. Pneumatique (11) pour véhicule de tourisme comprenant un sommet (12), deux bourrelets (32), deux flancs (30) reliant chaque bourrelet (32) au sommet (12) et une armature de carcasse (34) ancrée dans chaque bourrelet (32), l'armature de carcasse (34) comprenant une unique couche de carcasse (36), le sommet (12) comprenant une armature de sommet (16) et une bande de roulement (14), l'armature de carcasse (34) s'étendant dans chaque flanc (30) et dans le sommet (12) radialement intérieurement à l'armature de sommet (16), le pneumatique (11) présente une hauteur de flanc H définie par H=SW x AR / 100 avec SW la largeur de section nominale et AR le rapport d'aspect nominal du pneumatique selon le manuel de la norme ETRTO 2019 telle que H < 95,
**caractérisé en ce que** le pneumatique (11) présente un indice de charge LI tel que LI ≥ LI'+1 et LI' étant l'indice de charge d'un pneumatique EXTRA LOAD présentant la même dimension selon le manuel de la norme ETRTO 2019 et **en ce que** :
- l'unique couche de carcasse (36) de l'armature de carcasse (34) comprenant un ancrage avec retournement, chaque bourrelet (32) comprenant un élément renforcement circonférentiel (33), l'unique couche de carcasse (36) a deux extrémités axiales (361, 362), chaque extrémité axiale (361, 362) étant agencée à une distance radiale (RNC) inférieure ou égale à 30 mm d'une extrémité radialement intérieure (331) de chaque élément de renforcement circonférentiel (33) de chaque bourrelet (32), ou
- l'unique couche de carcasse (36) de l'armature de carcasse (34) comprend un ancrage sans retournement.

2. Pneumatique (11) selon la revendication précédente, dans lequel LI'+1 ≤ LI ≤ LI'+4, de préférence LI'+2 ≤ LI ≤ LI'+4.

3. Pneumatique (11) selon l'une quelconque des revendications précédentes, dans lequel l'unique couche de carcasse (36) est délimitée axialement par deux bords axiaux (361, 362) de la couche de carcasse (36) et comprend des éléments de renfort filaires textiles (360) de carcasse s'étendant axialement d'un bord axial à l'autre bord axial de la couche de carcasse (36) selon une direction principale formant, avec la direction circonférentielle (X) du pneumatique (11) un angle allant, en valeur absolue, de 80° à 90°.

4. Pneumatique (11) selon l'une quelconque des revendications précédentes, présentant une largeur de section nominale SW allant de 205 à 315, un rapport d'aspect nominal allant de 25 à 55, un diamètre de jante nominale allant de 17 à 23 et un indice de charge LI allant de 98 à 116, de préférence une largeur de section nominale SW allant de 225 à 315, un rapport d'aspect nominal allant de 25 à 55, un diamètre de jante nominale allant de 18 à 23 et un indice de charge LI allant de 98 à 116, et plus préférentiellement une largeur de section nominale SW allant de 245 à 315, un rapport d'aspect nominal allant de 30 à **45,** un diamètre de jante nominale allant de 18 à 23 et un indice de charge LI allant de 98 à 116.

5. Pneumatique (11) selon l'une quelconque des revendications précédentes, dans lequel 0,82≤H/LI≤0,92.

6. Pneumatique (11) selon l'une quelconque des revendications précédentes, présentant une dimension et un indice de charge LI choisi parmi les dimensions et les indices de charge suivants: 205/40R17 88, 205/40ZR17 88, 255/35R18 98, 255/35ZR18 98, 245/35R20 98, 245/35ZR20 98, 265/35R20 102, 265/35ZR20 102, 245/35R21 99, 245/35ZR21 99, 255/35R21 101, 255/35ZR21 101, 265/35R21 103, 265/35ZR21 103, 285/30R21 103, 285/30ZR21 103, 315/30R21 109, 315/30ZR21 109, 315/30R23 111, 315/30ZR23 111.

7. Pneumatique (11) selon l'une quelconque des revendications précédentes, dans lequel l'armature de sommet (16) comprend une armature de frettage (22) délimitée axialement par deux bords axiaux (281, 282) de l'armature de frettage et comprenant au moins un élément de renfort filaire de frettage enroulé circonférentiellement hélicoïdalement de façon à s'étendre axialement entre les bords axiaux (281, 282) de l'armature de frettage (22).

8. Pneumatique (11) selon la revendication précédente dans lequel le ou chaque élément de renfort filaire de frettage s'étend selon une direction principale formant, avec la direction circonférentielle (X) du pneumatique (11), un angle, en valeur absolue, inférieur ou égal à 10°, de préférence inférieur ou égal à 7° et plus préférentiellement inférieur ou égal à 5°.

9. Ensemble monté (10) comprenant :
- un support de montage (100) comprenant une jante (200), et
- un pneumatique (11) selon l'une quelconque des revendications précédentes monté sur la jante (200).

10. Ensemble monté (10) selon la revendication précédente, dans lequel, l'armature de sommet (16) étant agencée radialement entre la bande de roulement (14) et l'armature de carcasse (34) et comprenant une armature de travail (20) comprenant au moins une couche de travail axialement la moins large (26), la couche de travail axialement la moins large (26) présentant une largeur axiale T2 exprimée en mm, et la jante (200) présentant une largeur de jante A selon le manuel de la norme ETRTO 2019, et exprimée en mm, le rapport T2/A est tel que T2/A ≤ 1,00, de préférence 0,93 ≤ T2/A ≤ 0,97.

11. Ensemble monté (10) selon la revendication 9 ou 10, dans lequel le pneumatique (11) est gonflé à une pression allant de 200 à 270 kPa.

12. Utilisation d'un pneumatique (11) comprenant un sommet (12), deux bourrelets (32), deux flancs (30) reliant chacun chaque bourrelet (32) au sommet (12) et une armature de carcasse (34) ancrée dans chaque bourrelet (32), le sommet (12) comprenant une armature de sommet (16) et une bande de roulement (14), l'armature de carcasse (34) s'étendant dans chaque flanc (30) et dans le sommet (12) radialement intérieurement à l'armature de sommet (16), le pneumatique (11) présentant une hauteur de flanc H définie par H=SW x AR / 100 avec SW la largeur de section nominale et AR le rapport d'aspect nominal du pneumatique selon le manuel de la norme ETRTO 2019 telle que H < 95, l'armature de carcasse (34) comprenant une unique couche de carcasse (36) pour que le pneumatique (11) présente un indice de charge LI tel que LI ≥ LI'+1 et **LI'** étant l'indice de charge d'un pneumatique EXTRA LOAD présentant la même dimension selon le manuel de la norme ETRTO 2019.

13. Utilisation d'un pneumatique (11) selon la revendication précédente, pour que le pneumatique (11) soit monté sur un véhicule ayant une motorisation hybride ou électrique.

14. Utilisation d'un pneumatique (11) selon I revendication 12 ou 13, pour que le pneumatique (11) soit gonflé à une pression allant de 200 à 270 kPa.

15. Véhicule de tourisme comprenant au moins un pneumatique (11) selon l'une quelconque des revendications 1 à 8 ou un ensemble monté (10) selon l'une quelconque des revendications 9 à 11, véhicule de tourisme de préférence ayant une motorisation électrique ou hybride.

## Patentansprüche

1. Reifen (11) für einen Personenkraftwagen, beinhaltend einen Scheitel (12), zwei Wülste (32), zwei Seitenwände (30), die jeden Wulst (32) mit dem Scheitel (12) verbinden, und eine Karkassenbewehrung (34), die in jedem Wulst (32) verankert ist, wobei die Karkassenbewehrung (34) eine einzige Karkassenlage (36) beinhaltet, wobei der Scheitel (12) eine Scheitelbewehrung (16) und einen Laufstreifen (14) beinhaltet, wobei sich die Karkassenbewehrung (34) in jeder Seitenwand (30) und in dem Scheitel (12) radial innerhalb der Scheitelbewehrung (16) erstreckt, wobei der Reifen (11) eine Seitenwandhöhe H aufweist, die durch H=SW x AR / 100 definiert ist, wobei SW die Nennquerschnittsbreite und AR das Nennquerschnittsverhältnis des Reifens gemäß dem Handbuch der Norm ETRTO 2019 ist, sodass H < 95,
**dadurch gekennzeichnet, dass** der Reifen (11) einen Lastindex LI aufweist, sodass LI ≥ LI'+1, und wobei LI' der Lastindex eines EXTRA LOAD-Reifens mit der gleichen Größe gemäß dem Handbuch der Norm ETRTO 2019 ist, und dass:
- die einzige Karkassenlage (36) der Karkassenbewehrung (34) eine Verankerung mit Umkehrung beinhaltet, wobei jeder Wulst (32) ein Umfangsverstärkungselement (33) beinhaltet, wobei die einzige Karkassenlage (36) zwei axiale Enden (361, 362) aufweist, wobei jedes axiale Ende (361, 362) in einem radialen Abstand (RNC) kleiner als oder gleich 30 mm von einem radial inneren Ende (331) jedes Umfangsverstärkungselements (33) jedes Wulsts (32) eingerichtet ist, oder
- die einzige Karkassenlage (36) der Karkassenbewehrung (34) eine Verankerung ohne Umkehrung beinhaltet.

2. Reifen (11) nach dem vorhergehenden Anspruch, wobei LI'+1 ≤ LI ≤ LI'+4, vorzugsweise LI'+2 ≤ LI ≤ LI'+4.

3. Reifen (11) nach einem der vorhergehenden Ansprüche, wobei die einzige Karkassenlage (36) axial durch zwei axiale Ränder (361, 362) der Karkassenlage (36) begrenzt wird und textile fadenförmige Karkassenverstärkungselemente (360) beinhaltet, die sich entlang einer Hauptrichtung, die mit der Umfangsrichtung (X) des Reifens (11) einen Winkel bildet, der als absoluter Wert von 80° bis 90° reicht, von einem axialen Rand zu dem anderen axialen Rand der Karkassenlage (36) axial erstrecken.

4. Reifen (11) nach einem der vorhergehenden Ansprüche, der eine Nennquerschnittsbreite SW, die von 205 bis 315 reicht, ein Nennquerschnittsverhältnis, das von 25 bis 55 reicht, einen Felgennenndurchmesser, der von 17 bis 23 reicht, und einen Lastindex LI, der von 98 bis 116 reicht, vorzugsweise eine Nennquerschnittsbreite SW, die von 225 bis 315 reicht, ein Nennquerschnittsverhältnis, das von 25 bis 55 reicht, einen Felgennenndurchmesser, der von 18 bis 23 reicht, und einen Lastindex LI, der von 98 bis 116 reicht, und noch bevorzugter eine Nennquerschnittsbreite SW, die von 245 bis 315 reicht, ein Nennquerschnittsverhältnis, das von 30 bis 45 reicht, einen Felgennenndurchmesser, der von 18 bis 23 reicht, und einen Lastindex LI, der von 98 bis 116 reicht, aufweist.

5. Reifen (11) nach einem der vorhergehenden Ansprüche, wobei 0,82≤H/LI≤0,92.

6. Reifen (11) nach einem der vorhergehenden Ansprüche, der eine Größe und einen Lastindex LI aufweist, die aus den folgenden Größen und Lastindizes ausgewählt sind: 205/40R17 88, 205/40ZR17 88, 255/35R18 98, 255/35ZR18 98, 245/35R20 98, 245/35ZR20 98, 265/35R20 102, 265/35ZR20 102, 245/35R21 99, 245/35ZR21 99, 255/35R21 101, 255/35ZR21 101, 265/35R21 103, 265/35ZR21 103, 285/30R21 103, 285/30ZR21 103, 315/30R21 109, 315/30ZR21 109, 315/30R23 111, 315/30ZR23 111.

7. Reifen (11) nach einem beliebigen der vorhergehenden Ansprüche, wobei die Scheitelbewehrung (16) eine Umreifungsverstärkung (22) beinhaltet, die durch zwei axiale Ränder (281, 282) der Umreifungsverstärkung axial begrenzt wird und ein fadenförmiges Umreifungsverstärkungselement beinhaltet, das umfänglich schraubenförmig gewickelt ist, sodass es sich zwischen den axialen Rändern (281, 282) der Umreifungsverstärkung (22) axial erstreckt.

8. Reifen (11) nach dem vorhergehenden Anspruch, wobei sich das oder jedes fadenförmige Umreifungsverstärkungselement gemäß einer Hauptrichtung erstreckt, die mit der Umfangsrichtung (X) des Reifens (11) einen Winkel bildet, der als Absolutwert kleiner als oder gleich 10°, vorzugsweise kleiner als oder gleich 7° und noch bevorzugter kleiner als oder gleich 5° ist.

9. Montierte Anordnung (10), beinhaltend:
- einen Montageträger (100), der eine Felge (200) beinhaltet, und
- einen Reifen (11) nach einem der vorhergehenden Ansprüche, der auf der Felge (200) montiert ist.

10. Montierte Anordnung (10) nach dem vorhergehenden Anspruch, wobei, wenn die Scheitelbewehrung (16) radial zwischen dem Laufstreifen (14) und der Karkassenbewehrung (34) eingerichtet ist und eine Arbeitsbewehrung (20) beinhaltet, die mindestens eine axial am wenigsten breite Arbeitslage (26) beinhaltet, die axial am wenigsten breite Arbeitslage (26) eine axial Breite T2, ausgedrückt in mm, aufweist und die Felge (200) eine Felgenbreite A gemäß dem Handbuch der Norm ETRTO 2019, und ausgedrückt in mm, aufweist, das Verhältnis T2/A derart ist, dass T2/A ≤ 1,00, vorzugsweise 0,93 ≤ T2/A ≤ 0,97.

11. Montierte Anordnung (10) nach Anspruch 9 oder 10, wobei der Reifen (11) auf einen Druck aufgepumpt ist, der von 200 bis 270 kPA reicht.

12. Verwendung eines Reifens (11), der einen Scheitel (12), zwei Wülste (32), zwei Seitenwände (30), die jeden Wulst (32) mit dem Scheitel (12) verbinden, und eine Karkassenbewehrung (34), die in jedem Wulst (32) verankert ist, beinhaltet, wobei der Scheitel (12) eine Scheitelbewehrung (16) und einen Laufstreifen (14) beinhaltet, wobei sich die Karkassenbewehrung (34) in jeder Seitenwand (30) und in dem Scheitel (12) radial innerhalb der Scheitelbewehrung (16) erstreckt, wobei der Reifen (11) eine Seitenwandhöhe H aufweist, die durch H=SW x AR / 100 definiert ist, wobei SW die Nennquerschnittsbreite und AR das Nennquerschnittsverhältnis des Reifens gemäß dem Handbuch der Norm ETRTO 2019 ist, sodass H < 95, wobei die Karkassenbewehrung (34) eine einzige Karkassenlage (36) beinhaltet, damit der Reifen (11) einen Lastindex LI aufweist, sodass LI ≥ LI'+1, und wobei LI' der Lastindex eines EXTRA LOAD-Reifens mit der gleichen Größe gemäß dem Handbuch der Norm ETRTO 2019 ist.

13. Verwendung eines Reifens (11) nach dem vorhergehenden Anspruch, damit der Reifen (11) an einem Fahrzeug montiert wird, das einen Hybrid- oder Elektroantrieb aufweist.

14. Verwendung eines Reifens (11) nach Anspruch 12 oder 13, damit der Reifen (11) auf einen Druck aufgepumpt wird, der von 200 bis 270 kPA reicht.

15. Personenkraftwagen, der mindestens einen Reifen (11) nach einem der Ansprüche 1 bis 8 oder eine montierte Anordnung (10) nach einem der Ansprüche 9 bis 11 beinhaltet, wobei der Personenkraftwagen vorzugsweise einen Elektro- und Hybridantrieb aufweist.

## Claims

1. Tyre (11) for a passenger vehicle, comprising a crown (12), two beads (32), two sidewalls (30) each connecting each bead (32) to the crown (12), and a carcass reinforcement (34) anchored in each bead (32), the carcass reinforcement (34) comprising a single carcass layer (36), the crown (12) comprising a crown reinforcement (16) and a tread (14), the carcass reinforcement (34) extending in each sidewall (30) and in the crown (12) radially on the inside of the crown reinforcement (16), the tyre (11) has a sidewall height H defined by H=SW x AR / 100, where SW is the nominal section width and AR is the nominal aspect ratio of the tyre in accordance with the manual of the ETRTO 2019 standard such that H < 95,
**characterized in that** the tyre (11) has a load index LI such that LI ≥ LI'+1 and LI' being the load index of an EXTRA LOAD tyre having the same size in accordance with the manual of the ETRTO 2019 standard, , and **in that** :
- the single carcass layer (36) of the carcass reinforcement (34) comprising an anchorage with turn-up, each bead (32) comprising a circumferential reinforcing element (33), the single carcass layer (36) has two axial ends (361, 362), each axial end (361, 362) being arranged at a radial distance (RNC) of less than or equal to 30 mm from a radially inner end (331) of each circumferential reinforcing element (33) of each bead (32), or
- the single carcass layer (36) of the carcass reinforcement (34) comprises an anchorage without turn-up

2. Tyre (11) according to the preceding claim, wherein LI'+1 ≤ LI ≤ LI'+4, preferably LI'+2 ≤ LI ≤ LI'+4.

3. Tyre (11) according to either one of the preceding claims, wherein the single carcass layer (36) is axially delimited by two axial edges (361, 362) of the carcass layer (36) and comprises carcass textile filamentary reinforcing elements (360) extending axially from one axial edge to the other axial edge of the carcass layer (36) along a main direction forming an angle ranging from 80° to 90° in terms of absolute value with the circumferential direction (X) of the tyre (11).

4. Tyre (11) according to any one of the preceding claims, having a nominal section width SW ranging from 205 to 315, a nominal aspect ratio ranging from 25 to 55, a nominal rim diameter ranging from 17 to 23 and a load index LI ranging from 98 to 116, preferably a nominal section width SW ranging from 225 to 315, a nominal aspect ratio ranging from 25 to 55, a nominal rim diameter ranging from 18 to 23 and a load index LI ranging from 98 to 116, and more preferably a nominal section width SW ranging from 245 to 315, a nominal aspect ratio ranging from 30 to 45, a nominal rim diameter ranging from 18 to 23 and a load index LI ranging from 98 to 116.

5. Tyre (11) according to any one of the preceding claims, wherein 0.82 ≤ H/LI ≤ 0.92.

6. Tyre (11) according to any one of the preceding claims, having a size and a load index LI chosen from among the following sizes and load indexes: 205/40R17 88, 205/40ZR17 88, 255/35R18 98, 255/35ZR18 98, 245/35R20 98, 245/35ZR20 98, 265/35R20 102, 265/35ZR20 102, 245/35R21 99, 245/35ZR21 99, 255/35R21 101, 255/35ZR21 101, 265/35R21 103, 265/35ZR21 103, 285/30R21 103, 285/30ZR21 103, 315/30R21 109, 315/30ZR21 109, 315/30R23 111, 315/30ZR23 111.

7. Tyre (11) according to any one of the preceding claims, wherein the crown reinforcement (16) comprises a hoop reinforcement (22) that is axially delimited by two axial edges (281, 282) of the hoop reinforcement and comprises at least one hooping filamentary reinforcing element wound circumferentially in a helix so as to extend axially between the axial edges (281, 282) of the hoop reinforcement (22).

8. Tyre (11) according to the preceding claim, wherein the or each hooping filamentary reinforcing element extends along a main direction forming an angle which, in terms of absolute value, is less than or equal than 10°, preferably less than or equal to 7° and more preferably less than or equal to 5°, with the circumferential direction (X) of the tyre (11).

9. Mounted assembly (10) comprising:
- a mounting support (100) comprising a rim (200), and
- a tyre (11) according to any one of the preceding claims, mounted on the rim (200).

10. Mounted assembly (10) according to the preceding claim, wherein, with the crown reinforcement (16) being arranged radially between the tread (14) and the carcass reinforcement (34) and comprising a working reinforcement (20) comprising at least one axially narrowest working layer (26), the axially narrowest working layer (26) having an axial width T2 expressed in mm, and the rim (200) having a rim width A according to the manual of the ETRTO 2019 standard and expressed in mm, the ratio T2/A is such that T2/A ≤ 1.00, preferably 0,93 ≤ T2/A ≤ 0,97.

11. Mounted assembly (10) according to claim 9 or 10, wherein the tyre (11) is inflated at a pressure ranging from 200 to 270 kPa.

12. Use of a tyre (11) comprising a crown (12), two beads (32), two sidewalls (30) each connecting each bead (32) to the crown (12), and a carcass reinforcement (34) anchored in each bead (32), the crown (12) comprising a crown reinforcement (16) and a tread (14), the carcass reinforcement (34) extending in each sidewall (30) and in the crown (12) radially on the inside of the crown reinforcement (16), the tyre (11) having a sidewall height H defined by H=SW x AR / 100, where SW is the nominal section width and AR is the nominal aspect ratio of the tyre in accordance with the manual of the ETRTO 2019 standard such that H < 95, the carcass reinforcement (34) comprising a single carcass layer (36) so that the tyre (11) has a load index LI such that LI ≥ LI'+1 and LI' being the load index of an EXTRA LOAD tyre having the same size in accordance with the manual of the ETRTO 2019 standard.

13. Use of a tyre (11) according to the preceding claim, so that the tyre (11) is mounted on a vehicle having an hybrid or electric motor.

14. Use of a tyre (11) according to claim 12 or 13, so that the tyre (11) is inflated at a pressure ranging from 200 to 270 kPa.

15. Passenger vehicle comprising at least one tyre (11) according to any one of Claims 1 to 8 or a mounted assembly (10) according to any of the claims 9 to 11, passenger vehicle preferably having an hybrid or electric motor.
